# EUROPEAN PATENT APPLICATION

(11) **EP 3 637 339 A1**
(43) Date of publication of application: **15.04.2020**
(21) Application number: 18199036.7
(22) Date of filing: 08.10.2018
(51) Int. Cl.: G06Q 10/10, G06Q 10/00, G06Q 10/06

(54) **METHOD FOR IN-PROCEDURE INITIALIZATION OF NEW INSTRUCTURAL FLOW PROCEDURE ON HEAD-MOUNTED DISPLAY DEVICE**

(71) Applicant: Augnition NV, 9830 Sint-Martens-Latem (BE)
(72) Inventor: Verstraeten, Peter, 9830 Sint-Martens-Latem (BE)
(74) Representative: Brantsandpatents bvba

(57) **Abstract**

The current invention discloses a method and system for initializing a new procedure during real-time procedural flow instructions for a first procedure on one or more head mounted display devices. Each procedure consists of a series of tasks and each task contains one or more substeps represented by information cards. Each task prompts a user response from a predetermined set of possible user responses comprising of at least a validation, a rejection and requesting assistance. The method consists of running the first procedure on a head mounted display device by displaying one or more information cards corresponding to the one or more substeps of the tasks of the first procedure on the head mounted display device of a user. The user of the head mounted display device provides a response prompted by each of the information cards. When the user response is requesting to launch a procedure for assistance or escalation, a new procedure is defined in real time environment on the head mounted display device. The new procedure details comprising of at least the specific task and/or information card from which the user requested further assistance, are uploaded on a central web-based platform where a list of eligible procedures is selected from the procedures defined on the platform. The new procedure selected by the user during the execution of a task of the first procedure, is automatically forwarded to one or more users different from the current user by the central web-based platform. The users to which the new procedure is forwarded are selected based on a predefined requirement of one or more skills and/or certifications for the one or more tasks of the new procedure, the profile of the registered users, etc.

## Description

### Technical field

The present invention is related to providing digital work instructions on augmented reality glasses. More specifically, the present invention relates to method and system for initializing a new procedure during real-time execution of existing procedure on one or more head mounted display devices.

### Background

Augmented reality is a maturing technology that is able to create a more meaningful and useful environment for desk less workers in the industry 4.0 scenario. Providing digital work instructions on augmented reality glasses for the workers enables efficient execution of procedures while saving time and maximizing productivity.

A work instruction using augmented realty is a step-by-step guideline to implement the process and procedure in an enterprise or organization. Execution of procedures by presenting digital work instructions on augmented reality glasses provides several advantages over traditional paper based techniques. Projecting work instructions directly in the field of view of the deskless workers / technicians / inspectors through a small Head Mounted Display on glasses allows to keep the hands of the operator free to do the job. Moreover if the right and relevant information is clearly presented at the right time, it avoids time losses due to searching for information in manuals or documentation applications.

When executing a work instruction or an inspection workflow, operators, technicians and inspectors often detect issues that require further investigation or repair by another expert colleague. The desk-less worker or inspector detecting the issue is typically at work somewhere in a factory or in the field. Traditionally the person will write down a few elements on a paper or will try to memorize some elements. At a later time when arriving in an office, the person will send a mail to the right person or will open an application on a terminal or PC to log the case in an ERP or other issue tracking information system.

US 2015/0153571 disclose systems and methods for providing task-based instructions. The system provides step by step instruction to the user's augmented display for performing a task and comprises of a data input device to capture information related to progress of the task. The captured information is forwarded to the server system and information related to next step is received. However, the patent does not provide a mechanism to handle issues arising during real time task executions and resolving the issues using the head-mounted display devices.

Deploying head-mounted display devices, specifically smart glasses, for hands-free digital work instructions and inspection workflow execution makes no sense if issues are to be handled with the traditional paper flow.

There is a need in the technology domain to address issues arising during procedure executions in real time using smart glasses.

Also executing digital work instructions on head mounted display devices requires the users to interact with the device to provide input regarding the execution status of the task or to provide input regarding various environmental conditions or user observations. The user further requires interacting with the head mounted display devices to indicate that an issue has encountered and assistance is required from another expert colleague.

The current user interaction techniques with head mounted display devices provide limited possibilities and have associated disadvantages:
- Control buttons on a temple tip of the glasses are by definition not visible for the wearer and as such complex to manipulate. Merely the search by finger tips for the right button to press on the temple tip is a distraction for the wearer. The use of this interaction method is therefor to be avoided or to be limited to a bare necessity.
- Voice-based user interaction allows keeping the hands 100% free for the job and causes less distraction of the mind if the commands are clear and straightforward. Surrounding noise and operator accents can however result into voice recognition failures. Moreover too many voice-based interactions or too loud commands will lead to vocal fatigue for the wearer.
- The touchpad embedded in the temple tip of smart glasses is very small and by definition positioned outside the wearer's field of view. As a consequence the interaction with the touchpad is limited to a few basic movements with a finger tip: tap, double tap, swipe forward and backward, swipe down. While these interactions are much easier than operating control buttons, they also require a hand/fingertip for a second. Though this interaction mechanism is simple and reliable, it is not a 100% hands-free method.
- Using the embedded camera in the smart glasses to detect hand gestures is another way to interact with the device (e.g. thumbs up or down). Assisted reality glasses aspire to inform the operator while keeping the eyes, hands and mind free for the job. Performing the right gestures requires the operator's attention and at least one hand for the movement. Moreover this mechanism is not suited for more complex operator input (e.g. input of measured values, selecting options from a list etc.).

The aim of the present invention is to provide a solution to overcome at least part of the above mentioned disadvantages. The method and devices of the present invention aim to provide a mechanism to initialize a new procedure during real time execution of a first procedure to resolve issues arising during executing a first procedure. The invention further provides for user response with minimum inputs from the user.

### Summary of the invention

It is therefore an object of the invention to provide digital work instructions on head mounted display devices, specifically for smart glasses.

It is further an object of the invention to handle one or more issues encountered during procedure executions in real time using head mounted display devices.

It is further an object of the invention to provide the method and system for initializing a new procedure during real-time procedural flow instructions on one or more head mounted display devices.

It is further an object of the invention to automatically uploading the new procedure details on a central web-based platform and forwarding the new procedure details to one or more different users.

It is further an object of the invention to provide effective user interaction mechanisms that allows the operators to keep the eyes, hands and mind on the job.

It is also an object of the invention to provide user interaction mechanism to request assistance or further investigation or follow-up (or also referred to as 'issue escalation') from an expert colleague to resolve an issue encountered during a procedure.

### Description of figures

**FIG.1** shows a system for initializing a new procedure during real-time procedural flow instructions for a first procedure, where the computing devices and user devices may or may not be interchangeable.
**FIG.2** illustrates an exemplary Head Mounted Display device.
**FIG.3** illustrates a procedure definition for sequence of tasks.
**FIG.4** illustrates a procedure execution authorization for specific users of an exemplary procedure for "Oil Check" procedure. The bottom part illustrates the configuration of 3 possible escalation/action procedures that can be triggered during the oil check procedure.
**FIG.5** illustrates a configuration for an exemplary NFC (Non-conformity) procedure, with specific user input (issue description) that is requested at the time of launch of the NFC procedure.
**FIG.6** depicts an example of an information card in a task of an oil check procedure, and possible task status confirmation buttons and the general feedback button (plus button).
**FIG.7** depicts a flowchart for initializing a new procedure during real-time procedural flow instructions for a first procedure.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

While this solution may be subject to various modifications and take alternative forms, it has been illustrated as an example in the accompanying drawings and will be described in detail below. However, it should be understood that this solution is not intended to be limited to the specific forms disclosed.

Some aspects comparable in terms of scope, the disclosed embodiments are described below. It should be understood that these aspects are presented merely to provide the reader with a brief summary of certain forms that could take the solution and that these aspects are not intended to limit its scope. Indeed, this solution can encompass a variety of aspects that may not be defined below.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.
The terms "user", "individual user", "operator", "technician", "inspector" and "individual" may be used interchangeably with each other. The present invention is also applicable to "one or more individual users" as described in the claim, includes plurality of users, individual users, operators, technicians, inspectors and individuals.
The term "administrator" may include a supervisor, continuous improvement user and any equivalent person who is authorized to define the procedure/ task / information card / input request card.
The term "computing device" may include a plurality of possible devices, such as tablet, computer, personal digital assistant (PDA), and any sort of mobile computing device known in the art.
The "head mounted display device" may be selected from the smart glasses, augmented reality device, augmented reality goggles, wearable glass device or other similar smart wearable devices. Note that the user may also operate a tablet or smartphone instead of a smart glass.
The term "information card" can be used to also describe "input request cards", and can be used interchangeably, unless it is directed to a card where a user input is required, which means it only relates to a input request card.

In the following description of the preferred embodiment, reference is made to the accompanying drawings which form a part hereof, and in which is shown by way of illustration the specific embodiment in which the invention may be practiced. It is to be understood that other embodiments may be utilized as requirement changes may be made without departing from the scope of the present invention.

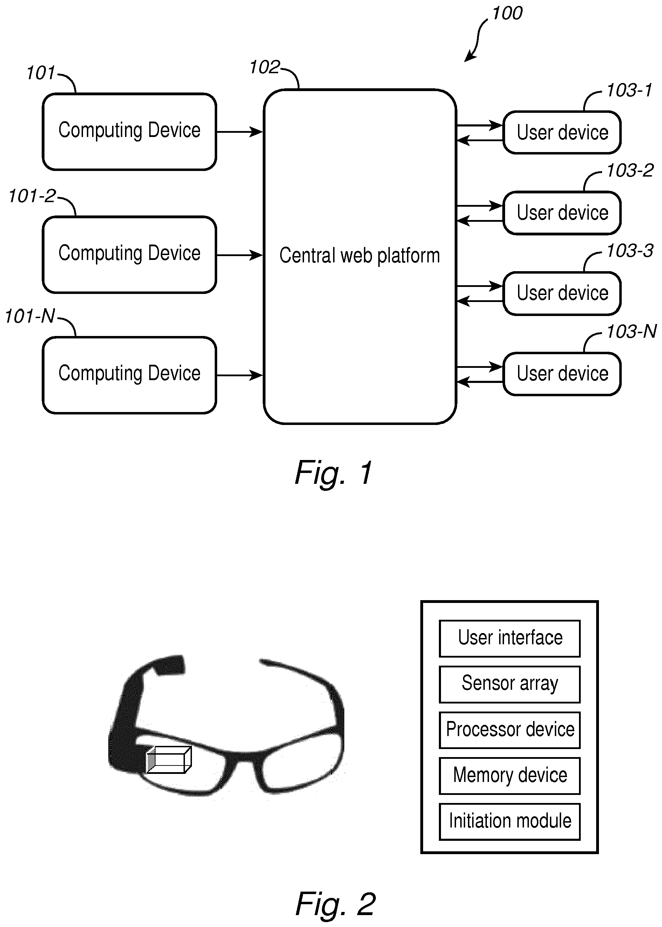

### Description of Figure 1

Fig.1 illustrates exemplary system 100 for implementing the disclosure. As shown in Figure 1, the system 100 includes one or more computing devices 101, central web platform 102, and one or more head mounted device 103.

The computing devices 101, host authoring application programming interface for defining the flow of business processes and granting execution permissions to authorized users and user groups. The computing devices 101 may include one or more components that perform processes consistent with the disclosed invention may include one or more computers, e.g., processor device, a CPU, and/or other hardware-based applications processing devices, configured to execute software instructions programmed to perform aspects of the invention disclosed in this document.

The user devices 103 are head mounted display devices and can be selected from smart glasses, augmented reality devices, augmented reality goggles, wearable glass device or other similar smart wearable devices, like smart watches or smartphones, tablets or PC. These devices are capable of displaying work instructions content on their display. Note however that the user devices 103 may also comprise other devices than head mounted display devices, for instance, laptops, tablets, smartphones, computers, smart watches, etc., as the method is also executable on such devices.

The central web platform 102 hosts a web application for providing procedural flow instructions on the head mounted display devices of the user. The users register themselves on the platform as administrators, operators, technicians, continuous improvement staff, supervisors, etc. The platform allows authorized work flow writers (administrators) to define and manage enterprise procedures on an easy and intuitive interface. The defined procedures are stored in a database on the central web platform and the procedures can be executed by the registered technicians and operators on their head mounted display devices. Each procedure consists of a series of tasks and each task contains one or more substeps represented by information cards and/or input request cards. Each task prompts a user response from a predetermined set of possible user responses comprising of at least a validation, a rejection and an option to request assistance. This user response can be provided at any time during the task, though the option of providing the user response may also be restricted to the end of each task (as a validation of some sort).

Furthermore, it should be noted that the user may preferably request assistance at any time, and is not limited to a specific information or input request card that allows such a request. However, it is to be understood that the assistance request is typically not adapted to the specific card on which the request has been issued, but adapted to the task wherein the request was issued. However, in some embodiments, the request may be provided with further information such as the specific card at which the request was issued, to provide further context for the person handling the assistance (or for analysis at a later time).

The platform also allows initiating new procedures during real time execution of a first procedure based on response received from the users. The platform selects the new procedure from the previously defined procedures on the platform based on the details received from the head mounted display device of the user executing the first procedure. The details may comprise of specific task and/or input request card where the user response is requesting assistance. The new procedure may be created to resolve one or more issues encountered during execution of the first procedure. The details comprising of the specific input request card and/or task indicates the exact step in the procedure where the issue was encountered. The platform further forwards the selected new procedure to one or more new user and/or user groups different from the user executing the first procedure. The new user and/or user groups is selected based on the parameters comprising of exact identity of the user, one or more required skills, certification and/or accreditation for the new procedure, location of the users, work schedule of the users, etc.

When the new procedure details are forwarded to a user and/or group of users, the new procedure appears in the "ToDo" list of the application running on their head mounted device. In case where the new procedure is forwarded to a group of users, the central web-based platform wait until the new procedure is taken up and started on the head mounted display device by one of the users and retracts the forwarded new procedure from the other users.

The central web platform logs the details related to procedure execution which is utilized for review and analyze for continuous improvement purposes by supervisors and continuous improvement staff. The procedure execution details may comprise of identity of the user for each task and/or substep, start time for each task, start time for each substep, end time for each task, end time for each substep, duration of each task, duration of each substep, start time for the procedure, end time for the procedure, duration of the procedure, user responses.

The present invention will be now described in more details, referring to examples that are not limitative.

### Description of Figure 2

Figure 2 shows an exemplary head mounted display device for carrying out the invention. The head mounted device 200 may include a user interface 201, display 202, sensor array 203, processor device 204, a memory 205, initiation module 206, and/or any other components that may facilitate the display of content to the user.

User interface 201 allows the user to navigate through the various information cards and input request cards while executing a task in a procedure. The user interface comprise of a simple interaction mechanism comprising of a simple tap on the display to select a particular option of the information card or input request card or providing voice commands to initiate procedures on the central web platform. Further, user interface 201 may be connected to one or more communication components, such as cellular, Wi-Fi, Bluetooth transceivers, or any other wireless transceivers or communication equipment. User interface 201 may package and send user commands or input to central web platform. Based on these commands and/or input, Central web platform may return additional or updated content to be displayed to the same or one or more other users.

Display 202 may include any suitable display for providing content to a user. For example, display 202 may include one or more translucent, transparent, or semitransparent components configured to pass at least some light from a scene to the eyes of a user. Display 202 may also include opaque lenses or components, e.g., where the images seen by the user are computer-generated, constitute light-guided projections of real world objects, or include images captured by one or more cameras (or other image acquisition devices) associated with user head mounted display 202.

Sensor array 203 may include any type of sensor configured to provide an output signal useful in providing content to a user. In some embodiments, sensor array 203 may include one or more GPS sensors, cameras, barometric sensors, proximity sensors, physiological monitoring sensors, chemical sensors, magnetometers, gyroscopes, accelerometers, bar code scanners, motion detectors, image sensors, depth sensors, eye tracking sensors, etc.

Processor devices 204 may include one or more suitable hardware-based processing devices, such as a microprocessor, controller, central processing unit, etc. that can execute software-based instructions.

The memory devices 205 may include magnetic storage units, optical storage units, RAM, ROM, hard drives, flash memory, etc. The memory devices may be a volatile or non-volatile, magnetic, semiconductor, tape, optical, removable, non-removable, or other type of storage device or non-transitory computer-readable medium. The memory devices may be two or more memory devices distributed over a local or wide area network, or may be a single memory device.

Initiation Module 206 may include a component for initializing a new procedure in real time environment on the head mounted display devices. On receiving a user response of requesting assistance or escalation support, a new procedure is defined and the details of the new procedure comprising on the specific task or input request card is automatically uploaded on the central web platform.

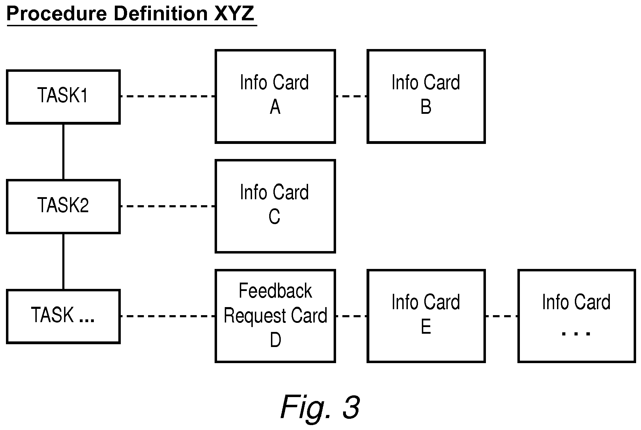

### Description of Figure 3

FIG.3 illustrates procedure definition for sequence of tasks. Each procedure is defined by a series of tasks and each task is defined by one or more substeps. Each of the substeps is represented by an information card or an input request card. For example as shown in the figure, task 1 consists of two steps A & B, represented by the respective information cards, i.e. Info Card A and Info Card B. Task 2 may consists of only substep C, represented by Info Card C. The procedures are defined on the central web-based platform by an administrator or other equivalent authorized personnel.

It should be noted that FIG. 3 refers to 'Info Cards' only, but these may be either information cards and/or input request cards, and are referred to as 'Info Cards' to simplify the wording.

Further, the procedure defining comprises of following configurable parameters of the tasks:
Task name: indicates the name of task.
Task duration time: It indicates time required to perform the task.
Task risks: includes Risks associated with the particular task.
Protection materials: Indicates protection materials required while performing the task.
Permits: Indicates permits needed for the execution of the task
Tools: Indicates required tools for the task execution.

Configurable execution confirmation status buttons for the task: It includes the options provided to confirm the executions status of the task like which may be selected from proceed, decline or NA. The proceed option for the user to provide status that task is successful. NA Option for the user is to skip the task. Decline option for the user is to indicate that task execution as not successful.

While defining a procedure on the platform, the administrator can flag whether this procedure can also be initiated as a new procedure during the real-time execution of one or more other procedures. The procedures which are defined as "initiated/launched" are the only procedure the user can launched as an action. The user can launch/initiate if that particular procedure has some issues and require further inspection or repair by an expert. Additionally the administrator can decide that if such procedure is launched as a new procedure during real time execution of one or more other procedures, whether the initiator should provide additional information and whether these information elements are optional or required. The administrator can also define to which user and/or user groups the procedure, when launched as a new procedure during real time execution of one or more other procedures, can be sent for execution. The user and/or user groups for the new procedure are different from the current user who is executing the current procedure, and are selected based on the required skill level for carrying the new procedure. If the administrator specifies multiple options for users and/or user groups for carrying out the new procedure, the ultimate choice of the new user of the new procedure is decided by the initiator. At the level of a procedure definition, the administrator can define/configure by which operators (possibly in combination with a case) the procedure can be executed. For each execution permission, one can also define if the executor can transfer the execution to other persons or groups. Additionally, the administrator can select for a specific procedure execution permission if and which of the eligible procedures (those flagged as "can be launched as action") will be usable as new procedure during the execution of the procedure by the authorized person or group. Further, the administrator can specify whether none or whether one or more of the selected procedures that can be initiated as new procedure are configured as "Decline Handler". If the user response is "decline" for a task, then a decline handler procedure execution is automatically initiated.

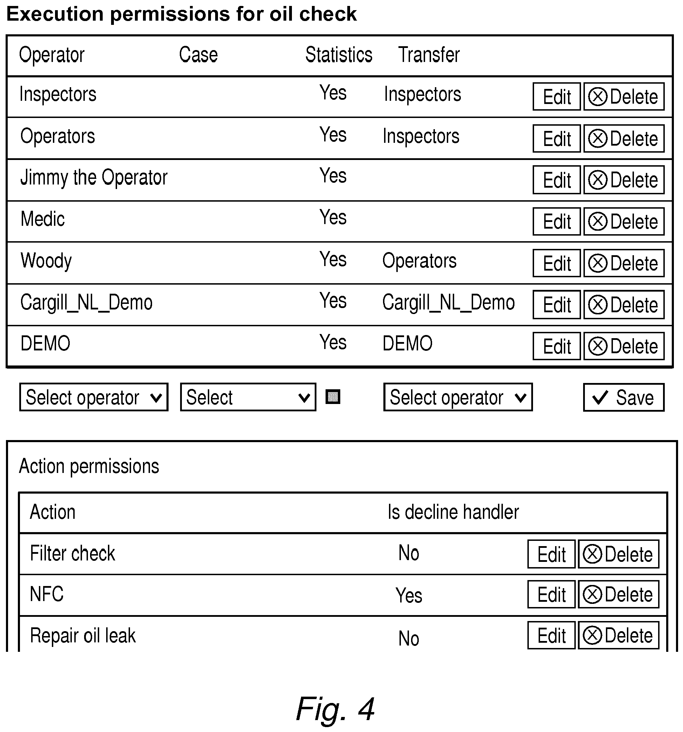

### Description of Figure 4

FIG.4 illustrates procedure of an exemplary procedure for "Oil Check". The figure shows the list of user who all have permission to execute the instructions and to whom the execution permissions for oil check. It shows which operators (possibly in combination with a case), are permitted to execute the procedure and whether the executor can transfer the execution to other persons or groups. 401 illustrates the which operator is selected for particular case to receive the execution authorization, and to which other operator the procedure can be transferred during the execution by the former operator. As shown in the figure, three procedures indicated in 402 - "Filter Check", "NFC" and "repair oil leak" can be launched as new procedures during the execution of "Oil check" procedure. Moreover the administrator can specify whether none or whether one or more of the selected action procedures are configured as "Decline Handler". The configuration of the above example specifies that during the execution of the Oil Check procedure, 3 actions can be launched at any (or more) tasks of the procedure. For each Oil Check task that is "declined" during execution, automatically an NFC procedure is launched as an action.

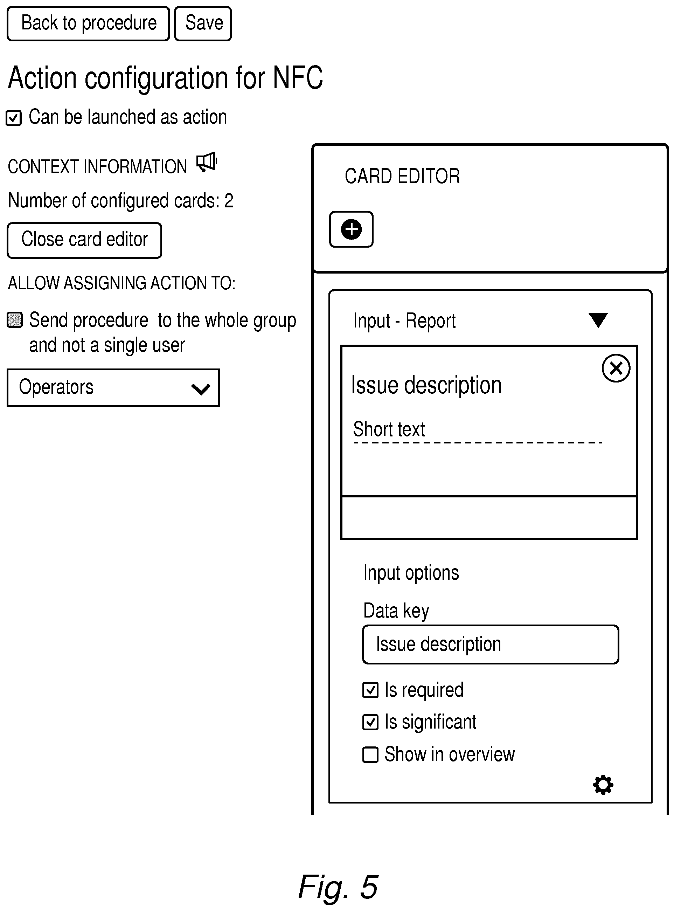

### Description of Figure 5

Figure 5 illustrates configuration for an exemplary NFC procedure. Action configuration for NFC 501 allows the option for administrator to flag whether this procedure can also be initiated as a new procedure during the execution of one or more other procedures. The context information 502 provides the option for administrator to provide the number of information cards and/or input request cards when this procedure is initiated as a new procedure. As shown, administrator has configured 2 information cards in this case.

The allowing assigning action to 503 allows administrator to flag whether this procedure is assigned to whole group or only to a single user. The administrator may also define to which operators and/or operator groups the procedure, when launched as an action, can be sent for execution.

The administrator may decide that if such procedure is launched as an action, whether the initiator (user) should provide additional information using issue description 504, and whether these information elements are optional or required.

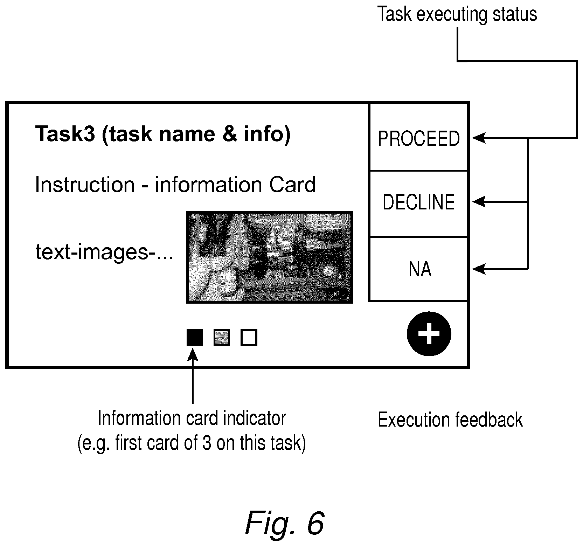

### Description of Figure 6

FIG. 6 illustrates an exemplary information card 600 relating to a specific task displayed to the user. The information card 600 is a two dimensional card that contains task name and information, task execution status, task execution feedback, and Information card indicator.

The task name and information 601, contains task name and information associated with the task. Task information may further contains audio, image, video and similar instructions.

Task execution status 602 may be provided to the system using proceed 603, decline 604 and NA 605 options provided on the information cards. Proceed option 603 represents task execution as successful. Decline option 604 represents task execution is not successful. NA Option 605 represent that task has been skipped because it was not relevant or applicable or possible. However, all the three options are not always available. The availability of a "Decline" 604 or 'NA (not applicable)" 605 options is defined at task level in the procedure definition model. These options may not be present for all the tasks and may be available according to task level. The "Proceed" 603 option is only displayed when the operator has seen all "mandatory" information cards and filled in all "required inputs" in the input request cards.

Execution feedback is provided by "plus option" 606 provided in the information card. The "plus option" 606 allows the user to perform additional interactions: for example, sometimes user is having difficulty in understanding the task so request can be made for display all available cards for the task. User can also add comments, photos, videos, recordings as execution feedback on a specific task in a particular execution.

New procedures may be initialized by "plus option" 606 provided in the information card. The user may request assistance using "plus option" 606. On receiving the assistance request, new procedure details are defined in real time environment on the head mounted display device and uploaded to the central web platform. At the central web platform new procedure is selected from the predefined procedure stored in the central web platform based on the new procedure details uploaded to the platform, the new procedure details being the specific task and/or information card where the request for assistance was received.

Further, New procedures may be initialized by "decline option" 604 provided in the information card. The decline option 403 may initialize the new procedure only if particular task is configured as decliner handler. If user needs further assistance or investigation on particular task, a new procedure may be launched for head mounted display of one or more user different from the first user.

The Information card indicator 607 at bottom indicates the displayed information card. It also indicates total number of cards available for the task. Only the applicable cards are displayed to the user. For example, cards that apply for the user's skill level for the procedure and task, Cards that are mandatory to be seen etc.

The information card also provides mechanisms for the user to interact by selecting from the available responses of "proceed", "decline", "NA", "plus". The user may provide his response by selecting the appropriate option. Further the user navigates between the information cards by swiping. Further, user response may also be provided in the form on simple voice commands such as "launch action" and "action name".

The information card has the following configurable characteristics:
Card content: It should contain what are the instructions it should have, image and detailed description of the task need to be performed.
Format: It defines the format of the information card what fields it includes and position of each field in the information card.
Input: It defines input required from the user for information card is mandatory or optional.
Display: it defines whether the card is mandatory to be seen by user or can be skipped by the user.
Skill level: The number of info cards that are displayed per task can depend on the user (or typically his or her skill levels). A task can for instance have 7 different steps or info cards, which are all shown to a novice user, before he or she can go to the next task (or before he or she can provide an input, ...). However, the task typically will have a few modes. Novice mode means running through all the cards, but intermediate mode can for instance only require that the user must see cards 1, 3, 4 and 6 (which are defined as important) before they can advance. Expert mode can further reduce this to cards 1 and 6. Master mode might even reduce that to only card 1.

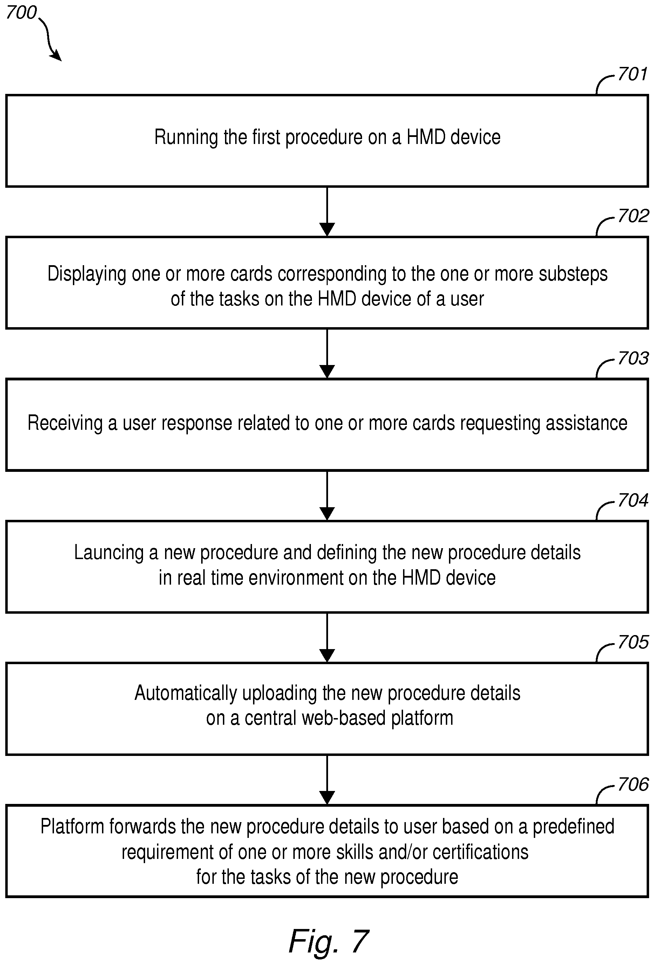

### Description of Figure 7

Figure 7 illustrates the flow diagram for initializing a new procedure during real-time procedural flow instructions for a first procedure on one or more head mounted display devices. Step 701 comprises of running a first procedure on the head mounted display device of a user. The procedure comprises of a series of tasks, each task is defined by one or more substeps represented by information cards. Step 702 comprises of displaying information cards corresponding to the substeps of the tasks the first procedure on the head mounted display device of a user. Step 703 comprises of receiving user response related to one or more information cards or input cards in a task where the user is requesting assistance and/or selecting a new procedure for initiation from the list of selectable procedures (said list being made up based on a number of parameters, amongst which could be the task at which the request was launched, the user details, the existing procedure, etc., or a combination thereof). Step 704 comprises of defining new procedure details in real time environment on the head mounted display device in response to the user input received in step 703. Step 705 comprises of automatically updating the new procedure details to the central web platform. The new procedure details are the specific task or information card where the user requests assistance. Finally, step 706 comprises of forwarding the new procedure selected in step 703 to one or more users different from the current user. The users to which the new procedure is forwarded are selected based on one or more parameters of said new procedure comprising of a predefined requirement of one or more skills and/or certifications for the one or more tasks of the new procedure, the profile of the registered users, etc.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

Although in the present disclosure user device is described in connection with a Head mounted display device, user device may include tablet devices, mobile phone(s), laptop computers, a wearable device, such as a smart watch, and any other computing device(s) known to those skilled in the art.

## Claims

1. A method for initializing a new procedure during real-time procedural flow instructions for a first procedure on one or more head mounted display devices, each procedure being defined by a series of tasks, each task being defined by one or more substeps represented by information cards or input request cards for the head mounted display device, and each input request card and each task prompting a user response from a predetermined set of possible user responses, the set of possible user responses for substantially each task comprising at least a validation and a rejection, and whereby the possible user responses for one or more tasks further comprises requesting assistance or issue an escalation, the method comprising of:
a. running the first procedure on a head mounted display device, wherein said first procedure includes a series of tasks and each task comprises of one or more substeps;
b. displaying said one or more information cards or input request cards corresponding to the one or more substeps of the tasks on the head mounted display device of a user, whereby a user response is prompted by each of the input request cards and each task;
c. receiving a user response related to one or more tasks wherein the user requests to launch a new procedure for assistance or issue escalation;
d. upon receiving said user response requesting launch of a new assistance procedure, the method comprises the following steps:
i. defining the assistance procedure details in real time environment on the head mounted display device;
ii. automatically uploading the assistance procedure details on a central web-based platform;
iii. selecting a new predefined procedure from the assistance and/or issue escalation procedures defined on said platform, based on the procedure details, said procedure details comprising at least the specific task from which the user requested further assistance;
iv. forwarding the selected new procedure to one or more users different from the current user, said forwarding being performed by the central web-based platform, whereby the users are registered on said platform, and whereby the users to which the new procedure is forwarded are selected based on one or more parameters of said new procedure, said parameters comprising at least: a predefined requirement of one or more skills and/or certifications for the one or more tasks of the new procedure, the profile of the registered users;

2. The method according to the preceding claim 1, wherein the procedures are defined on the web-based platform by an administrator or equivalent person who is authorized to define the procedure and/or task and/or input request card and/or information card.

3. The method according to any one of the preceding claims 1 or 2, wherein the head mounted display devices can be selected from smart glasses, augmented reality devices, augmented reality goggles, smart watch, wearable glass device or other similar smart wearable devices.

4. The method according to any one of the preceding claims 1 to 3, wherein the information card and input request card are two-dimensional cards that include but not limited to task name, task information, information card indicator, task execution status, execution feedback.

5. The method according to any one of the preceding claims 1 to 4, wherein the user response may be received by simple tap on the head mounted display device and/or voice commands.

6. The method according to any one of the preceding claims 1 to 5, wherein defining the new procedure may include receiving additional information provided by the user.

7. The method according to any one of the preceding claims1 to 6, wherein one or more users different from the current user for the new procedure are selected based on any of the combination of parameters further including but not limited to: exact identity of the user, one or more required skills, certification and/or accreditation for the new procedure, location of the users, work schedule of the users.

8. The method according to any one of the preceding claims 1 to 7, wherein the new procedure may be created to resolve one or more issues encountered during one or more information card, input request card or task execution.

9. The method according to any one of the preceding claims 1 to 8, wherein the new procedure is a predefined procedure retrieved from a database of the central web-based platform wherein all procedures are stored, said retrieval being based on at least: the specific first procedure and/or specific task of the first procedure from which the user requested further assistance.

10. The method according to any one of the preceding claims 1 to 9, wherein the central web-based platform will, upon initialization of the forwarded new procedure by one of the users to which it was forwarded, retract the forwarded new procedure from the other users.

11. The method according to any one of the preceding claims 1 to 10, wherein user performance details are logged per procedure, said user performance details comprising one or more of the following: user identity for each task and/or substep, start time for each task, start time for each substep, end time for each task, end time for each substep, duration of each task, duration of each substep, start time for the procedure, end time for the procedure, duration of the procedure, user responses.

12. The method according to any one of the preceding claims 1 to 11, wherein the number of information cards and/or input request cards mandatorily shown for a task is dependent on a skill level and/or certification of the user running the procedure, said number being defined for each task in each procedure.

13. A system for initializing a new procedure during existing real-time procedural flow instructions for a first procedure on one or more head mounted display devices, the system comprising:
a. a computing device for defining procedures by a user, wherein the procedures is defined by a series of tasks, each task being defined by one or more substeps represented by information cards and/or input request cards for the head mounted display device, and each input request card and each task prompting a user response from a predetermined set of possible user responses, the set of possible user responses for substantially each task comprising at least a validation and a rejection, and whereby the possible user responses for one or more tasks further comprises requesting assistance;
b. a display for displaying the one or more information cards and/or input request cards corresponding to the one or more tasks of the first procedure on the head mounted display device of a user;
c. a user interface associated with the head mounted display device for receiving a user response related to one or more input request cards on the head mounted display device of a user;
d. a module for initializing a new procedure in real time environment on the head mounted display devices upon receiving a user response requesting to launch a procedure for assistance or escalation, wherein the new procedure may or may not be mandatory to advance to certain other tasks in the running first procedure, said module being adapted to receive further input from the user; and
e. a centralized web-based platform where the new procedure details are uploaded from said module, wherein the central web-based platform forwards the new procedure details to one more users different from the current user, said users being registered on the platform, whereby the users to which the new procedure is forwarded are selected by the platform based on one or more parameters, said parameters comprising at least: a predefined requirement of one or more skills and/or certifications for the one or more tasks of the new procedure, the profile of the registered users.

14. The system according to the preceding claim 13, wherein the procedures are defined using computing device on the web-based platform by an administrator or equivalent person who is authorized to define the procedure/ task / information card.

15. The system according to any one of the preceding claims 13 or 14, wherein the information cards and/or the input request cards are a two-dimensional card that includes but not limited to task name, task information, information card indicator, task execution status, execution feedback.

16. The system according to any one of the preceding claims13 to 15, wherein the user interface is used to receive the user response by simple tap on the head mounted display device or voice commands.

17. The system according to any one of the preceding claims 13 to 16, wherein a module for initializing the new procedure may include additional information provided by the user.

18. The system according to any one of the preceding claims 13 to 17, one or more users different from the current user for new procedure are selected based on any of the combination of parameters including but not limited to exact identity of the user, required skill, certification, or any other skill set.
